# EUROPÄISCHE PATENTANMELDUNG

(11) **EP 3 506 175 A1**
(43) Veröffentlichungstag der Anmeldung: **03.07.2019**
(21) Anmeldenummer: 17210818.5
(22) Anmeldetag: 28.12.2017
(51) Int. Cl.: G06N 5/02, G06Q 50/32, G06F 17/30

(54) **VERFAHREN UND GERÄT ZUR ANPASSUNG EINES GERÄTEDATENMODELLS AUF DER BASIS EINER ONTOLOGIE**

(71) Anmelder: Schneider Electric Industries SAS, 92500 Rueil-Malmaison (FR)
(72) Erfinder: Harnischfeger, Michael, 63776 Mömbris (DE)
(74) Vertreter: Stoffregen, Hans-Herbert

(57) **Zusammenfassung**

Die Erfindung betrifft Verfahren und ein Gerät zur Anpassung eines Gerätedatenmodells (DDM) eines Quellgerätes (SD) einer Quelldomain (QD) auf der Basis einer Ontologie (SR, OR, OM) an eine Zieldomaine (TD). Um das Gerätedatenmodell flexibel an verschiedene Automatisierungsdomains anpassen zu können, so dass die Semantik und Struktur der von dem Gerät bereitgestellten Daten systemübergreifend verstanden und verarbeitet werden können, ist vorgesehen, dass semantische und/oder ontologische Informationen (SMP, SMI) mittels einer in dem Quellgerät (SD) implementierten Verarbeitungseinheit (SOE) auf der Basis der Ontologie (SR, OR, OM) automatisch in das Gerätedatenmodell (DDM) des Quellgerätes (SD) zur Erzeugung zumindest eines erweiterten Gerätedatenmodells (EDM) eingefügt werden und/oder dass das Gerätedatenmodell (DDM) des Quellgerätes (SD) mittels der Verarbeitungseinheit (SOE) auf der Basis der Ontologie (SR, OR, OM) zur Erzeugung zumindest eines transformierten Gerätedatenmodells (TDM) automatisch transformiert wird und dass das zumindest eine erweiterte Gerätedatenmodell (EDM) oder das transformierte Gerätedatenmodell (TDM) durch das Quellgerät (SD) für Zielgeräte (CD) der Zieldomain (TD) bereitgestellt wird.

## Beschreibung

Die Erfindung bezieht sich auf ein Verfahren nach dem Oberbegriff des Anspruchs 1 sowie auf ein Gerät, insbesondere Automatisierungsgeräte, wie Feldgerät oder Gateway, nach dem Oberbegriff des Anspruchs 12 zur Durchführung des Verfahrens.

Ein Verfahren der eingangs genannten Art ist in der WO 2016/110356 A1 beschrieben. Das Verfahren betrifft die Integration einer semantischen Datenverarbeitung in einem Gerät, insbesondere einem Feldgerät der Automatisierungstechnik. Dabei wird ein generisches Beschreibungssprachenschema zur Definition eines semantischen Depots als Ausgangsbasis verwendet. Dieses Beschreibungssprachenschema wird mit Inhalten einer Ontologie zur semantischen Repräsentation einer Funktionsweise des Gerätes angereichert. Dabei werden Klassen und/oder Subklassen der Ontologie zusammen mindestens einer den Klassen und/oder Subklassen zugeordneten Eigenschaft aus der Ontologie entnommen, in eine entsprechende Schemadeklaration umgeformt und die Schemadeklaration in das Beschreibungssprachenschema eingefügt.

Gemäß dem Stand der Technik wird anschließend aus dem Beschreibungssprachenschema eine oder mehrere Grammatiken erzeugt, vorzugsweise Grammatiken gemäß dem standardisierten Datenformat "Efficient XML Interchange", abgekürzt EXI, welche im Gerät integriert werden. Dadurch soll eine kompaktere semantische Datenverarbeitung und Datenübertragung erreicht werden.

Eine derartige Datenverarbeitung wird nach dem Stand der Technik einmalig in einem Gerät implementiert. Eine Anpassung der semantischen Datenverarbeitung an verschiedene Zieldomains, damit das Gerät ohne aufwendige Anpassung in verschiedenen Domains eingesetzt werden kann, ist laut dem Stand der Technik nicht vorgesehen.

Davon ausgehend liegt der vorliegenden Erfindung die Aufgabe zugrunde, ein Verfahren und ein Gerät der eingangs genannten Art derart weiterzubilden, dass das Gerätedatenmodell flexibel an verschiedene Automatisierungsdomains angepasst werden kann, so dass die Semantik und Struktur der von dem Gerät bereitgestellten Daten systemübergreifend verstanden und verarbeitet werden kann.

Die Aufgabe wird erfindungsgemäß durch die Merkmale des Anspruchs 1 gelöst.

Gemäß der Erfindung werden semantische und/oder ontologische Informationen mittels einer in dem Quellgerät implementierten Verarbeitungseinheit auf der Basis der Ontologie automatisch in das Gerätedatenmodell des Quellgerätes zur Erzeugung zumindest eines erweiterten Gerätedatenmodells eingefügt.

Alternativ kann das Gerätedatenmodell des Quellgerätes mittels der Verarbeitungseinheit auf der Basis der Ontologie zur Erzeugung zumindest eines transformierten Gerätedatenmodells automatisch transformiert werden.

Das zumindest eine erweiterte Gerätedatenmodell oder das transformierte Gerätedatenmodell wird durch das Quellgerät für Zielgeräte der Zieldomain bereitgestellt.

Da in dem Gerät eine Verarbeitungseinheit zur Anpassung bzw. Umwandlung der Gerätedatenmodelle implementiert ist, können die Geräte flexibel und ohne großen Programmieraufwand für unterschiedliche Zieldomains eingesetzt werden. Durch das erfindungsgemäße Verfahren werden Anwendungen ermöglicht, wobei Daten domainübergreifend von jedem anderen System verwendet, verstanden und verarbeitet werden können.

Anwendungen sind z. B. die Kommunikation zwischen Endgeräten beliebiger Domains in den Bereichen "Internet of Things", "Industry 4.0" sowie "Host-Domain/ Line of Business (LoB) -Solutions".

Insbesondere wird durch das erfindungsgemäße Verfahren die Integration von Geräten und Systemen von Drittanbietern in bestehende Automatisierungsdomains sowie die Integration von Geräten eines Herstellers in Systeme von Drittanbietern oder kundenspezifische Systeme erheblich vereinfacht.

Das Verfahren umfasst u.a. die Verfahrensschritte:
- Bereitstellen der Ontologie als domainspezifische Ontologie der Zieldomain und/oder einer normalisierten Ontologie,
- Laden der Gerätedaten oder des Gerätedatenmodells sowie der domainspezifischen und/oder normalisierten Ontologie in die Verarbeitungseinheit,
- Erzeugen der semantischen Information durch Analyse der Gerätedaten oder des Gerätedatenmodells auf der Basis von semantischen Regeln, ontologischen Regeln und/oder eines domainspezifischen und/oder normalisierten ontologischen Modells,
- Erzeugen des erweiterten Gerätedatenmodells durch Einfügen der semantischen Information in das Gerätedatenmodell und/oder
- Transformation des Gerätedatenmodells in ein domainspezifisches Gerätedatenmodell oder ein normalisiertes Datenmodell,
- Bereitstellen des erweiterten, domainspezifischen Gerätedatenmodells, des transformierten, domainspezifischen Gerätedatenmodells und/oder des transformierten, normalisierten Datenmodells durch das Quellgerät.

Gemäß einer bevorzugten Verfahrensweise ist vorgesehen, dass das erweiterte Gerätedatenmodell und/oder das transformierte Gerätedatenmodell durch ein Kommunikationsmodul bereitgestellt wird, in dem ein Protokoll (ECP = Enhanced Communication Protocol) wie OPC UA implementiert ist, welches die Fähigkeit hat, erweiterte oder komplexe Datenmodelle darzustellen, insbesondere hierarchische Daten bzw. strukturierte und komplexe Konstrukte und Objekte darstellen kann. Dadurch wird die Möglichkeit eröffnet, dass Zielgeräte der Zieldomain auf die Datenmodelle zugreifen können.

Vorzugsweise werden die semantischen Informationen in Form von Semantik-Metadaten-Punkten in das Gerätedatenmodell eingefügt. Die Semantik-Metadaten-Punkte verweisen auf Datenpunkte in dem Gerätedatenmodell des Quellgerätes, in denen der Semantik zugeordnete realen Werten gespeichert sind oder beschreiben Struktur-Punkte, die die hierarchischen Strukturen der Daten darstellen. Die Semantik-Metadaten-Punkte können auch die Struktur-Punkte genauer beschreiben, z. B. die Gruppierung von Messdaten-Informationen über ein Messgerät oder die genaue Information über den Ort, wo die Daten erfasst werden.

Vorzugsweise werden bei einem Zugriff auf das erweiterte Gerätedatenmodell durch ein Client-Gerät oder eine Client-Software die Semantik-Metadaten-Punkte bereitgestellt. Nach einem Aufruf eines Semantik-Metadaten-Punktes durch eine Gerätedatenquelle des Quellgerätes wird ein dem Semantik-Metadaten-Punkt zugeordneter realer Wert bereitgestellt.

Ein alternatives Verfahren zeichnet sich dadurch aus, dass das erweiterte Gerätedatenmodell durch eine Semantik-Metadaten-Ansicht mit den Semantik-Metadaten-Punkten zusammen mit einer Geräte-Daten-Ansicht bereitgestellt wird, wobei die Semantik-Metadaten-Punkte über Semantik-Metadaten-Referenzen auf die Gerätedaten referenziert werden.

Vorzugsweise werden die Semantik-Metadaten-Punkte automatisch bei einer Änderung von Gerätedaten oder des Gerätedatenmodells in das erweiterte Gerätedatenmodell eingefügt, wodurch die Anwendung vereinfacht wird. Die Änderung betrifft vorzugsweise eine Strukturänderung oder eine Hinzufügung oder Entfernung eines Datenpunktes.

Die den Semantik-Metadaten-Punkten zugeordneten realen Werte der Gerätedaten werden vorzugsweise durch die Gerätedatenquelle des Quellgerätes bereitgestellt.

Die Transformation des Gerätedatenmodells wird durch die Verarbeitungseinheit auf Basis von Ontologie-Regeln und/oder eines Ontologie-Modells der domainspezifischen Ontologie durchgeführt. Auch besteht die Möglichkeit ein normiertes Gerätedatenmodell zu erzeugen, aus dem dann weitere domainspezifische Gerätedatenmodelle erzeugt oder abgeleitet werden können.

Eine weitere Ausprägung des Verfahrens besteht darin, die Semantik- und/oder Ontologie-Informationen auf Anfrage in eine von dem Quellgerät gesendete Netzwerk-Protokoll-Nachricht einzubetten.

Des Weiteren bezieht sich die Erfindung auf ein Gerät, insbesondere Automatisierungsgerät, wie Feldgerät, mit einer Datenverarbeitungseinheit und einer Gerätedatenquelle mit Gerätedaten gemäß eines Gerätedatenmodells.

Erfindungsgemäß ist in dem Gerät eine Verarbeitungseinheit implementiert, die ausgebildet ist, auf der Basis einer Ontologie semantische und/oder ontologische Informationen automatisch in das Gerätedatenmodell einzufügen und/oder das Gerätedatenmodell zu transformieren und bereitzustellen.

Gemäß einer bevorzugten Ausführungsform ist die Verarbeitungseinheit eingangsseitig über eine Schnittstelle mit der Gerätedatenquelle gekoppelt und weist ausgangsseitig ein Kommunikationsmodul mit einer Client-/Server-Schnittstelle zur Bereitstellung des durch die semantische und/oder ontologische Informationen erweiterten Gerätedatenmodells auf. In die Client-/Server-Schnittstelle ist ein Protokoll implementiert, vorzugsweise Enhanced Communication Protocol wie OPC UA, welches die Fähigkeit besitzt, unterschiedliche Datenmodelle darzustellen.

Vorzugsweise ist die Verarbeitungseinheit über eine Management-Interface durch Laden von semantischen Regeln, ontologischen Regel und/oder eines ontologischen Modells konfigurierbar. Dadurch wird die Bereitstellung ein oder mehrerer ontologischer Modelle sowie semantischer oder ontologischer Regelsammlungen ermöglicht. Das Laden kann lokal über ein Speichermedium wie USB-Stick oder remote über z. B. einen Webservice erfolgen.

Das Gerät kann als ein Feldgerät oder ein Gateway ausgebildet sein.

Erfindungsgemäß ist vorgesehen, dass das Verfahren zur Anpassung des Gerätedatenmodells entweder in einem als Datenquelle ausgebildeten Gerät wie Feldgerät oder in einem als Datensenke ausgebildeten Gerät, wie beispielsweise einem Gateway, ausgeführt wird bzw. implementiert ist. Im Fall der Implementierung in einer Datensenke werden die Gerätedaten und/oder das Gerätemodell in die Datensenke geladen und durch die Verarbeitungseinheit verarbeitet.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von den Figuren zu entnehmenden bevorzugten Ausführungsbeispielen.

Es zeigen:
- Fig. 1: eine schematische Darstellung eines Feldgerätes mit Verarbeitungseinheit zur Erzeugung eines erweiterten, domainspezifischen Gerätedatenmodells auf der Basis einer Ontologie,
- Fig. 2: eine schematische Darstellung einer ersten Verfahrensweise zur Erzeugung des erweiterten Gerätedatenmodells durch Einfügung von semantischen Metadaten, die die semantischen Metadaten mit den Gerätedaten mittels Referenzen verknüpft,
- Fig. 3: ein Kommunikationsdiagramm zur Ausführung der ersten Verfahrensweise gem. Fig. 2,
- Fig. 4: eine schematische Darstellung einer zweiten Verfahrensweise zur Erzeugung eines erweiterten, domainspezifischen Gerätedatenmodells durch Darstellung einer Gerätedaten-Ansicht und einer Semantik-Metadaten-Ansicht,
- Fig. 5: eine schematische Darstellung einer dritten Verfahrensweise zur Erzeugung eines transformierten, domainspezifischen Gerätedatenmodells auf der Basis einer Ontologie,
- Fig. 6: eine schematische Darstellung einer vierten Verfahrensweise zur Erzeugung einer Vielzahl von transformierten, domainspezifischen Gerätedatenmodellen auf der Basis eines normalisierten Datenmodells,
- Fig. 7: ein Kommunikationsdiagramm zur Ausführung der Verfahrensweisen nach Fig. 5 und 6,
- Fig. 8: eine schematische Darstellung zur Einbettung semantischer und/oder ontologischer Metadaten in eine zwischen Geräten auszutauschende Nachricht und
- Fig. 9: ein Kommunikationsdiagramm zur Ausführung des Verfahrens gemäß Fig. 8.

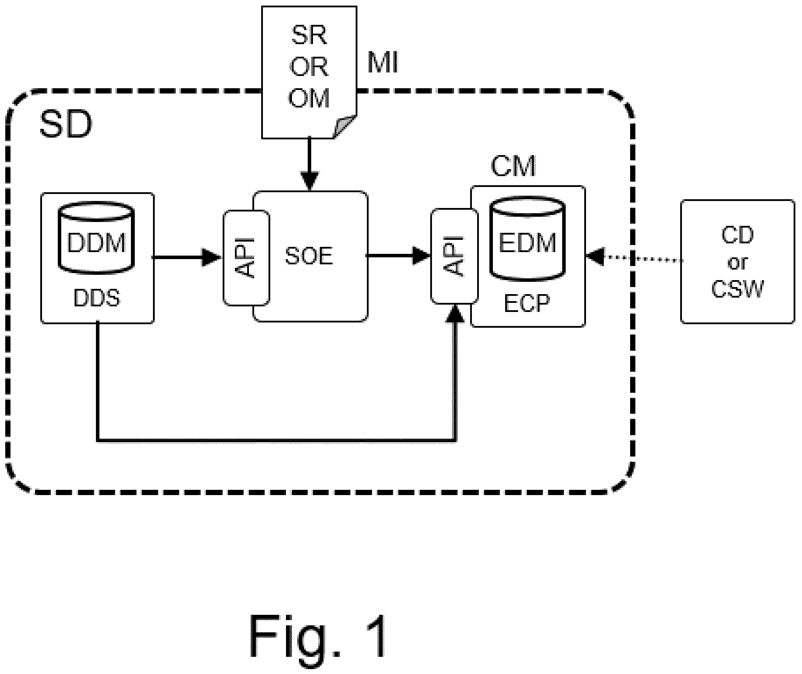

Fig. 1 zeigt rein schematisch ein Gerät SD, insbesondere ein Automatisierungsgerät wie Feldgerät, in dem eine Verarbeitungseinheit SOE zur Analyse und Anpassung bzw. Umwandlung eines in einer Gerätedatenquelle DDS gespeicherten Gerätedatenmodells DDM implementiert ist. Die Verarbeitungseinheit SOE ist über eine Schnittstelle API mit der Gerätedatenquelle DDS wie Datenspeicher oder einem auf dem Gerät laufenden Programm, einer Applikation oder einer Logik gekoppelt. Die Schnittstelle ist ausgebildet, um Gerätedaten DD bzw. das Gerätedatenmodell DDM in die Verarbeitungseinheit SOE laden zu können. Die Verarbeitungseinheit SOE kann über die Schnittstelle API der Gerätedatenquelle direkt auf die Gerätedatenquelle zugreifen oder kann sich über die eigene Schnittstelle API mit dem Programm bzw. der Logik des Gerätes verknüpfen, so dass das Geräteprogram bzw. die Gerätelogik auf die nötigen Aufrufe der Verarbeitungseinheit SOE zugreifen kann.

Ausgangsseitig ist die Verarbeitungseinheit SOE über eine weitere Schnittstelle API mit einem Kommunikationsmodul CM mit einer Client/Server-Schnittstelle gekoppelt, in der ein Kommunikationsprotokoll ECP (ECP -Enhanced Communication Protocol), wie z. B. OPC UA, implementiert ist, welches die Fähigkeit besitzt, erzeugte unterschiedliche Datenmodelle darzustellen, auf die z. B. über ein externes Client-Gerät CD oder eine externe Client-Software CSW mittels einer Server-Client-Verbindung oder nach einem "Publish/Subscribe- Verfahren" zugegriffen werden kann.

Die Verarbeitungseinheit SOE ist über eine Management-Interface MI konfigurierbar, wobei über die Management-Interface MI semantische Regeln SR, ontologische Regeln OR und/oder ein ontologisches Modell OM gemäß einer domainspezifischen Ontologie importiert, exportiert, definiert, verteilt und/oder aktualisiert werden kann. Die Ontologie wird als domainspezifische Ontologie der Zieldomain bereitgestellt. Auf der Basis der bereitgestellten Ontologie wird die Verarbeitungseinheit SOE konfiguriert. Vorzugsweise werden die Regeln und/oder Modelle in einem nicht näher beschriebenen internen Speicher oder Datenbank des Gerätes SD abgelegt, so dass auf diese durch die Verarbeitungseinheit SOE während des Betriebs zugegriffen werden kann. Auch besteht die Möglichkeit, dass die in dem nicht näher dargestellten Speicher gespeicherten Regeln und Modelle während des Betriebs aktualisiert und/oder geändert werden können.

Die Schnittstelle API des Kommunikationsmoduls CM ist mit der Gerätedatenquelle DDS gekoppelt, so dass referenzierte Datenwerte dem Kommunikationsmodul CM bereitgestellt bzw. abgefragt werden oder können oder eine interne Datenstruktur herausgegeben werden kann.

Die Verarbeitungseinheit SOE ist ausgebildet zur Einfügung von semantischen und/oder ontologischen Informationen SMP auf der Basis der semantischen Regeln SR und/oder der ontologischen Regeln OR in das Gerätedatenmodell DDM und/oder zur Transformation des Gerätedatenmodells DDM auf der Basis des ontologischen Modells OM.

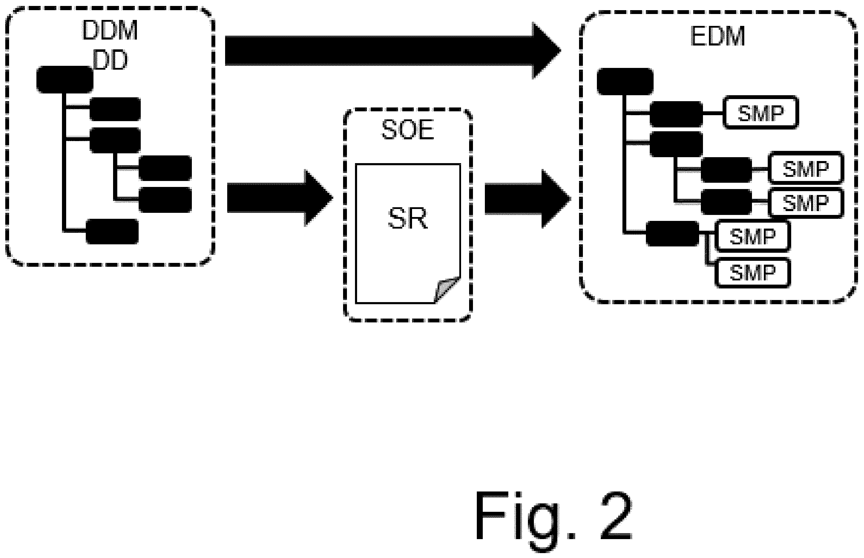

Fig. 2 zeigt rein schematisch eine erste Verfahrensweise. Die Gerätedaten DD oder das Gerätedatenmodell DDM werden in die Verarbeitungseinheit SOE geladen und analysiert. Bei der Analyse werden Semantik, Syntax und Struktur der Gerätedaten DD bzw. des Gerätedatenmodells DDM analysiert und mit der Semantik, der Syntax und der Struktur der domainspezifischen Ontologie verglichen. Aufgrund von unterschiedlichen Semantiken und Strukturen der Datenmodelle zwischen Quelldomain und Zieldomain werden unter Berücksichtigung der semantischen und/oder ontologischen Regeln SR, OR semantische Informationen SMP erzeugt und dem Gerätedatenmodell DDM hinzugefügt, so dass ein erweitertes, domainspezifisches Gerätedatenmodell EDM erzeugt wird.

Das erweiterte Gerätedatenmodell EDM des Quellgerätes SD wird in dem Kommunikationsmodul CM bereitgestellt, wobei durch die Verarbeitungseinheit SOE die erzeugten semantischen und/oder ontologischen Informationen als Semantik-Metadaten-Punkte SMP eingefügt werden. Das so erzeugte erweiterte Gerätedatenmodell EDM wird in dem Kommunikationsmodul CM für den Zugriff von externen Geräten CD, CSW der Zieldomain bereitgestellt.

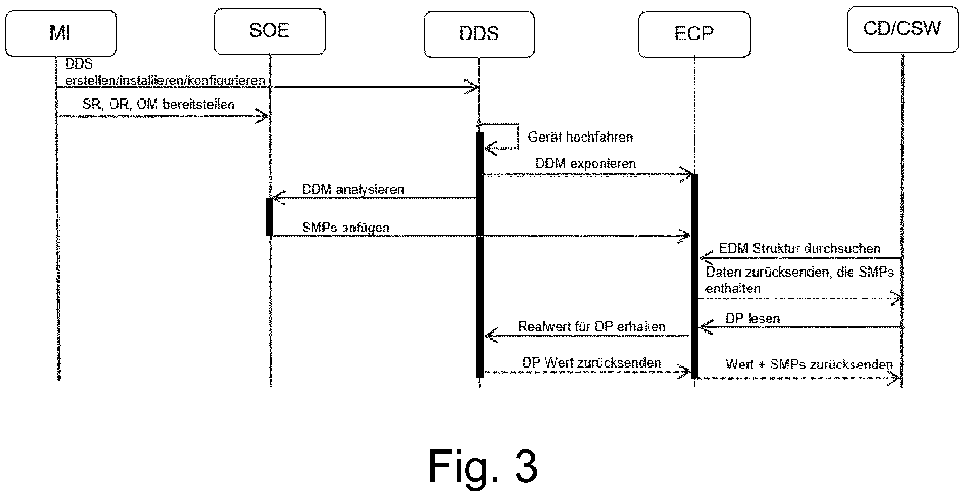

Fig. 3 zeigt eine Kommunikationssequenz zu dem in Fig. 2 dargestellten Verfahren des statischen Hinzufügens semantischer Metadaten SMP in das Gerätedatenmodell DDM.

Über das Management-Interface MI kann die Gerätedatenquelle DDS erzeugt, installiert und konfiguriert werden. Ferner wird über das Management-Interface MI die Verarbeitungseinheit SOE initialisiert, d. h. die semantischen Regeln SR, ontologischen Regeln OR sowie das ontologische Modell OM bereitgestellt bzw. geladen.

Nach dem Starten des Gerätes SD werden die Gerätedaten DD bzw. das Gerätedatenmodell DDM in dem Kommunikationsmodul CM dargestellt. Sodann wird das Gerätedatenmodell DDM in die Verarbeitungseinheit SOE geladen und in dieser auf Basis der semantischen Regeln SR analysiert. Bei der Analyse des Gerätedatenmodells DDM werden semantische Informationen erzeugt und in Form von Semantik-Metadaten-Punkten SMP dem Gerätedatenmodell DDM hinzugefügt, so dass in dem Kommunikationsmodul CM das erweiterte Gerätedatenmodell EDM angezeigt bzw. bereitgestellt wird.

Mittels des Client-Gerätes CD oder der Client-Software CSW kann die Struktur des erweiterten Gerätedatenmodells EDM durchsucht werden. Von dem Kommunikationsmodul ECP werden Daten an das Client-Gerät CD zurückgesendet, welche die Semantik-Metadaten-Punkte SMP enthalten. Die Datenpunkte können durch einen Lesevorgang des Client-Gerätes CD angefragt/eingelesen werden, wobei über das Kommunikationsmodul ECP die realen Werte für die Datenpunkte in der Gerätedatenquelle DDS gelesen werden. Die Gerätedatenquelle DDS sendet einen realen Wert des Datenpunktes, der zusammen mit dem Semantik-Metadaten-Punkt SMP an das Client-Gerät CD zurückgesendet wird.

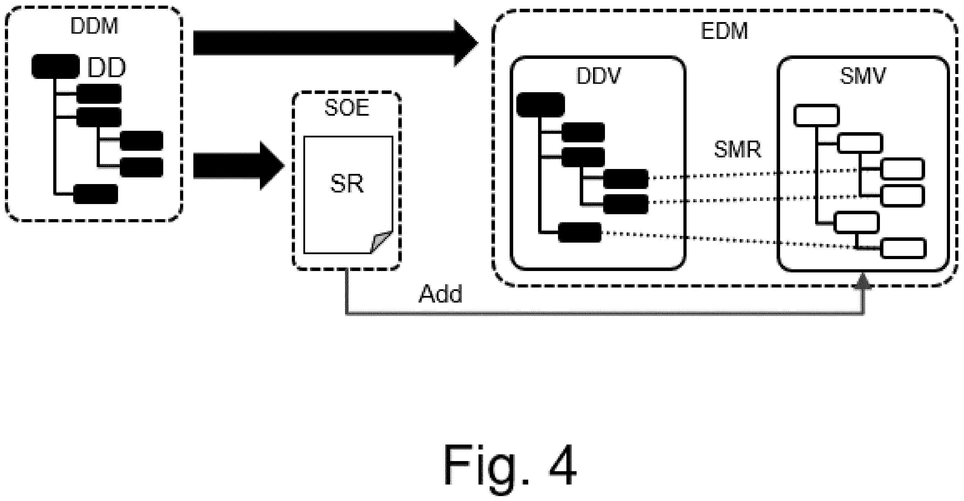

Fig. 4 zeigt schematisch ein zweites Verfahren, wonach die semantischen Informationen durch eine Semantik-Metadaten-Ansicht bereitgestellt werden.

Gemäß diesem Verfahren wird in dem Kommunikationsmodul CM ein erweitertes Gerätedatenmodell EDM dargestellt, welches eine Geräte-Daten-Ansicht DDV sowie eine Semantik-Metadaten-Ansicht SMV umfasst. Semantik-Metadaten-Ansicht SMV wird auf der Basis der semantischen Regeln SR mittels der Verarbeitungseinheit SOE erzeugt und in dem Kommunikationsmodul CM angezeigt.

Eine Zuordnung zwischen den Gerätedaten DD und den Semantik-Metadaten SMP erfolgt über Semantik-Metadaten-Referenzen SMR, die jeweils auf Gerätedaten DD referenzieren.

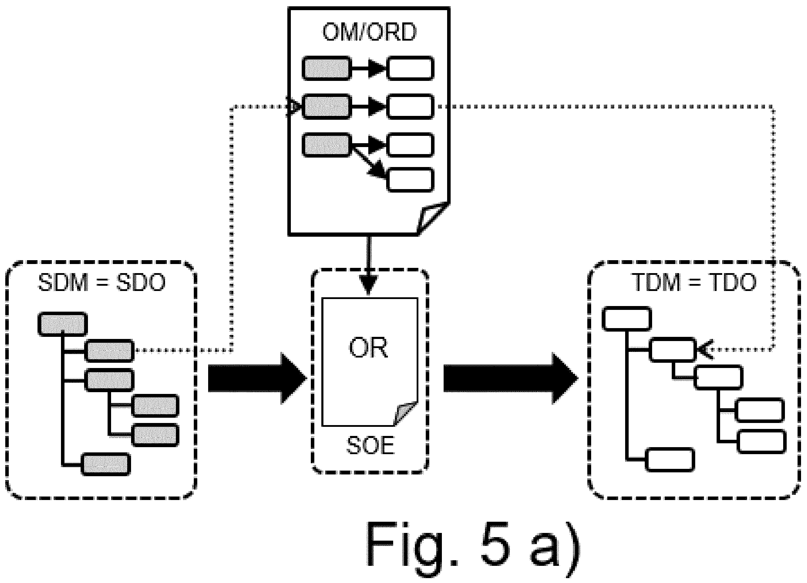

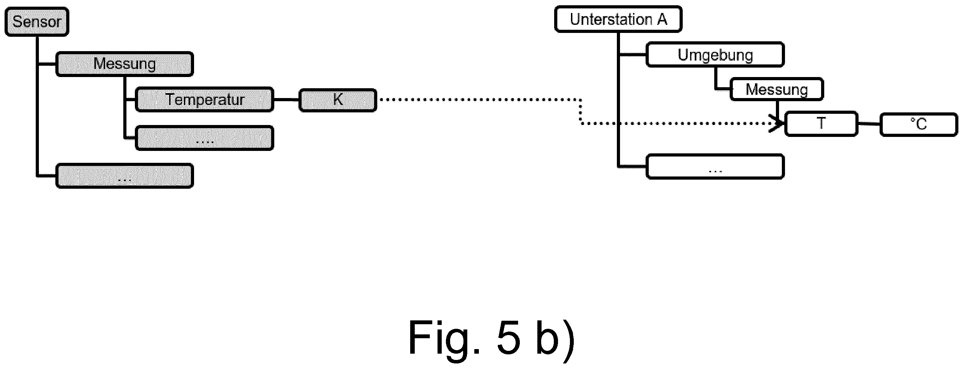

Fig. 5 a) zeigt eine dritte Ausführungsform des erfindungsgemäßen Verfahrens zur Umwandlung bzw. Transformation der Darstellung eines Gerätedatenmodells SDM der Quelldomain SDO in ein Zieldatenmodell TDM einer Zieldomain TDO auf Basis der eines domainspezifischen ontologischen Modells OM mit einer ontologischen Regeldefinition ORD zur Definition und Bereitstellung ontologischer Regeln OR.

Das Gerätedatenmodell SDM der Quelldomain SDO wird auf Basis der ontologischen Regeln OR in der Verarbeitungseinheit SOE analysiert und in das Zieldatenmodell TDM der Zieldomain TDO transformiert. Durch die Transformation erfolgt sowohl eine Umwandlung der Semantik der Gerätedaten als auch eine Umwandlung der Struktur der Gerätedaten, so dass nach einer vollständigen Umwandlung in der Zieldomain TDO keine Semantik-Metadaten-Punkte SMP mehr enthalten sind. Das erweiterte bzw. umgewandelte Zieldatenmodel TDM weicht hinsichtlich Semantik und Struktur von dem Quelldatenmodell SDM ab, wobei die Semantik-Metadaten-Punkte SMP nur indirekt in dem erweiterten bzw. umgewandelten Modell enthalten sind, je nachdem, ob in der Zieldomaine TDO Matadaten-Beschreibungen enthalten bzw. definiert sind.

Den in Fig. 5b dargestellten Datenstrukturen ist zu entnehmen, dass eine vollständige Umwandlung sowohl der Semantik als auch der Datenstruktur erfolgt. Der in dem Quelldatenmodell bezeichnete Messwert mit der Bezeichnung "Temperatur" und der Einheit Kelvin "K" wird in dem Zieldatenmodell TDM mit der Bezeichnung "T" und der Einheit "°C" dargestellt.

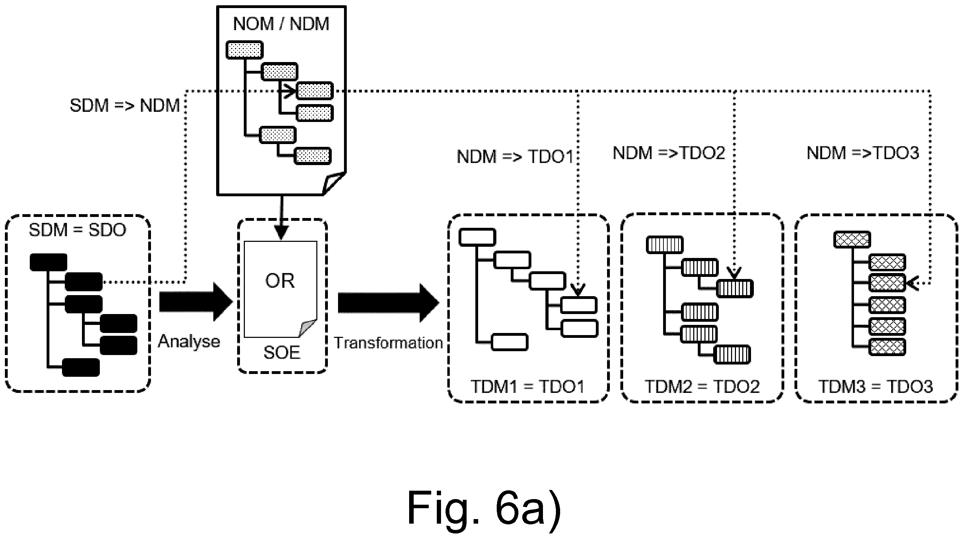

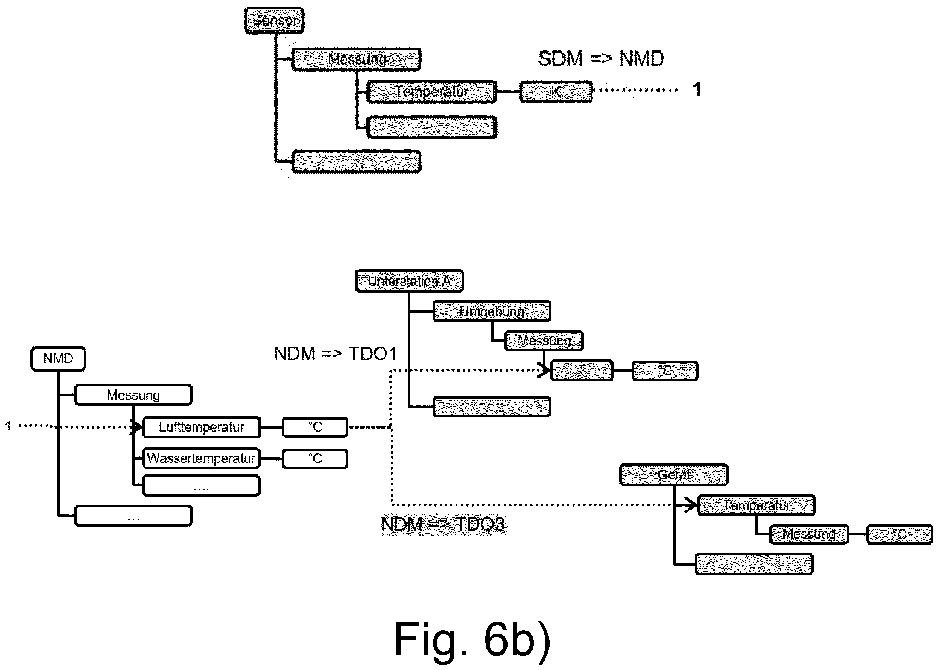

Fig. 6 a) zeigt ein weiteres alternatives erfindungsgemäßes Verfahren zur Transformation des Quelldatenmodells SDM in ein oder mehrere Zieldatenmodelle TDM1, TDM2, TDM3 die die verschiedenen zu unterstützenden Domain-Datenmodelle TDO1, TDO2, TDO3 repräsentieren. Bei diesem Verfahren wird das Quelldatenmodell SDM in ein normalisiertes Datenmodell NDM transformiert. Das Quelldatenmodell SDM wird in der Verarbeitungseinheit SOE auf Basis eines normalisierten ontologischen Modells NOM und/oder des normalisierten Datenmodells NDM analysiert und transformiert. Das normalisierte Datenmodell NDM kann dann auf einfache Weise in ein oder mehrere domainspezifische Datenmodelle TDO1, TDO2, TDO3 als Zieldatenmodelle umgewandelt werden.

Das normierte Modell wird im Vorfeld bei dem Systementwurf definiert oder kann ein bereits existierendes Domain-Modell sein. Dazu werden die Transformationen von und zu den unterstützten verschiedenen Domain-Modellen entwickelt oder definiert. Die Transformation zu dem normierten Domain-Modell NDM als auch zu einer speziellen Zieldomain TDO/TDM bestehen aus semantischen Regeln SR, ontologischen Regel OR, ontologischen Modellen OM oder Kombination von diesen.

Um aus zwei verschiedenen Domain-Modelen eine Transformation oder ein normalisiertes Datenmodell NDM abzuleiten, wird Knowhow bzw. Intelligenz benötigt, die von einem Experten erstellt wird. Die Definition der Regeln und/oder Transformationen SR, OR, OM sowie das normalisierte Datenmodell NDM sind erstellt und werden von der Verarbeitungseinheit SOE angewendet.

Die Ermittlung der Transformation oder des normalisierten Datenmodells NDM kann auch z. B. mittels künstlicher Intelligenz automatisch auf dem Gerät oder remote über z. B. einen Cloud-Service wie IBM-Watson erfolgen. Die künstliche Intelligenz kann auf einem AI/KI Chip auf dem Gerät implementiert sein.

Alternativ besteht die Möglichkeit, ein Gerätedatenmodell SDO direkt in ein Zieldatenmodell TDO1, TDO2, TDO3 zu transformieren. Allerdings müsste für jede Transformation ein Regelwerk bzw eine Ontologie hinterlegt werden.

Fig. 6b zeigt entsprechende Datenstrukturen, wobei die Datenstruktur des Quellgerätes hinsichtlich Semantik und Struktur in das normalisierte Datenmodell transformiert wird und auf Basis des normalisierten Datenmodells mehrere weitere domainspezifische Transformationen zur Erzeugung der transformierten Datenmodelle TDM1, TDM2, TDM3 durchgeführt werden können.

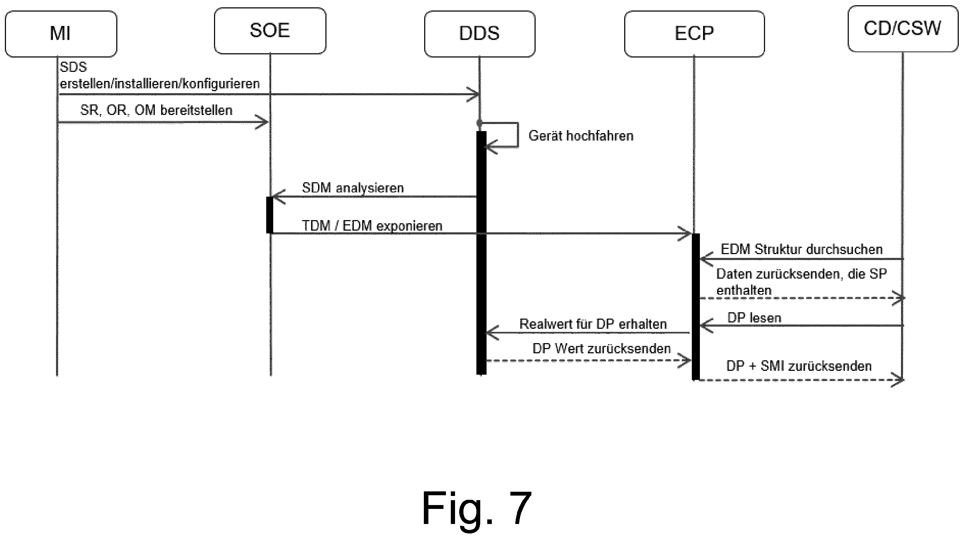

Fig. 7 zeigt eine Kommunikationssequenz zu dem Transformationsverfahren gemäß Fig. 5 und 6 auf der Basis von ontologischen Regeln OR.

Nach dem Start des Gerätes SD wird das Gerätedatenmodell SDM mittels der Verarbeitungseinheit SOE entsprechend der ontologischen Regeln OR analysiert und transformiert. Das transformierte Zieldatenmodell TDM wird in dem Kommunikationsmodul CM dargestellt und ist konform zu der Zieldomain TDO, in der das transformierte Zieldatenmodell TDM verwendet werden soll.

Bei einem Zugriff auf das transformierte Zieldatenmodell TDM durch ein Client-Gerät CD bzw. eine Client-Software CSW eines Zielgerätes aus der Zieldomain kann die Struktur des transformierten Datenmodells TDM durchsucht werden. Von dem Kommunikationsmodul CM werden Daten zurückgesendet, die Struktur-/Objektpunkte SP enthalten. Über die Struktur.-/Objektpunkte SP können Datenpunkte DP in Form einer Variablen mit realem Werte in der Gerätedatenquelle DDS abgerufen werden. Von der Gerätedatenquelle DDS werden Datenpunkt-Werte an das Kommunikationsmodul CM gesendet. Durch das Kommunikationsmodul CM wird die Variable mit Wert zusammen mit der entsprechenden Semantik-Metadaten-Information SMI bereitgestellt.

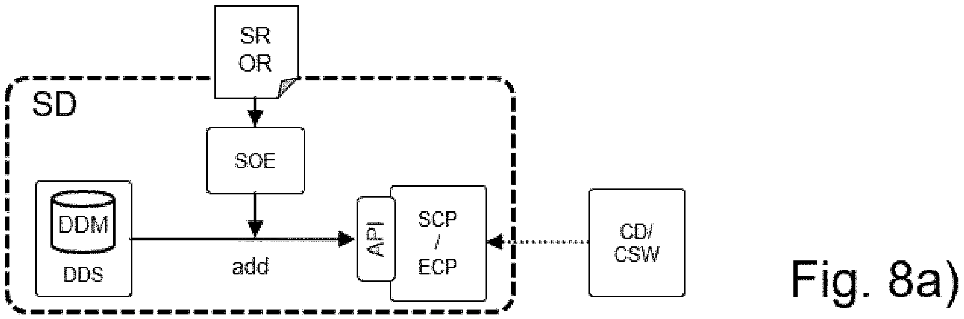

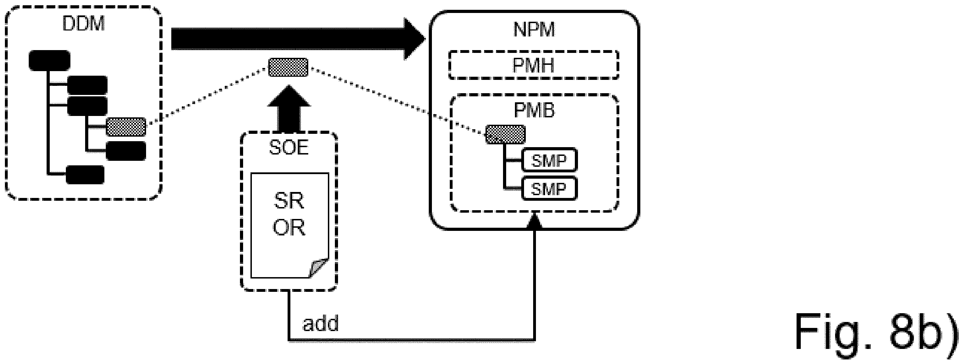

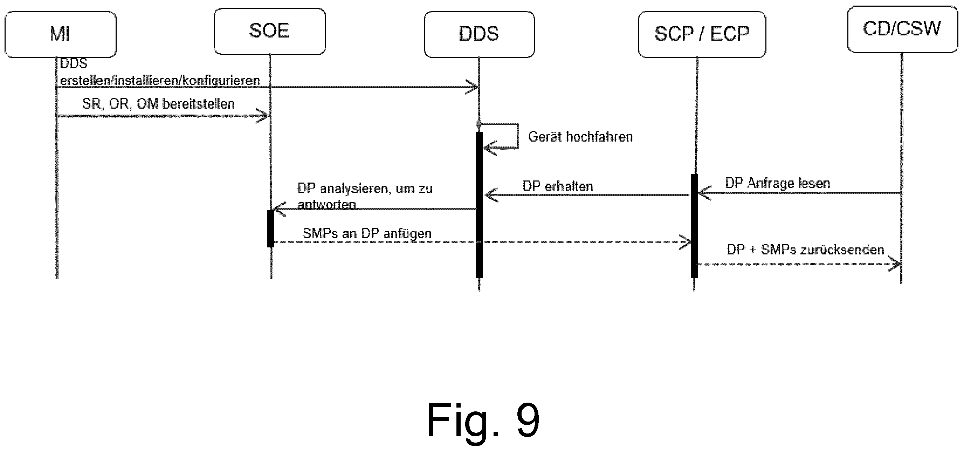

Die Fig. 8 und 9 zeigen ein weiteres alternatives Verfahren, wobei semantische Metadaten auf Abruf ("On demand") in eine von dem Quellgerät SD an ein Zielgerät TD übermittelte Netzwerk-Protokoll-Nachricht NPM eingebettet werden, wie dies in Fig. 8b dargestellt ist. Insbesondere werden die Semantik-Metadaten-Punkte SMP den Gerätedaten in einem sogenannten Protokoll-Nachrichten-Körper PMB zugefügt, die zusammen mit einem Protokoll-Nachrichten-Kopf PMH in einer Netzwerk-Protokoll-Nachricht NPM eingebettet sind.

Fig. 9 zeigt eine Kommunikationssequenz zwischen einem Client-Gerät CD bzw. einer Client-Software CSW und dem Gerät SD, wobei von dem Client-Gerät eine Anfrage eines Datenpunktes DP an das Kommunikationsmodul SCP, ECP gerichtet wird. Das Kommunikationsmodul SCP, ECP richtet eine Anfrage an die Gerätedatenquelle DDS. Der angefragte Datenpunkt wird durch die Verarbeitungseinheit SOE auf Basis der semantischen und ontologischen Regeln SR, OR analysiert, wobei Semantik-Metadaten-Punkte SMP erzeugt werden, die an den Datenpunkt hinzugefügt werden, wie dies in Fig. 8 b) in dem Protokoll-Nachrichten-Körper PMB dargestellt ist. Im anfragenden Client-Gerät CD werden der Datenpunkt und die erzeugten Semantik-Metadaten-Punkte SMP dargestellt.

## Patentansprüche

1. Verfahren zur Anpassung eines Gerätedatenmodells (DDM) eines Quellgerätes (SD) einer Quelldomain (SDO) auf der Basis einer Ontologie (SR, OR, OM) an eine Zieldomaine (TDO),
**dadurch gekennzeichnet,**
**dass** semantische und/oder ontologische Informationen (SMP, SMI) mittels einer in dem Quellgerät (SD) implementierten Verarbeitungseinheit (SOE) auf der Basis der Ontologie (SR, OR, OM) automatisch in das Gerätedatenmodell (DDM) des Quellgerätes (SD) zur Erzeugung zumindest eines erweiterten Gerätedatenmodells (EDM) eingefügt werden und/oder
**dass** das Gerätedatenmodell (DDM) des Quellgerätes (SD) mittels der Verarbeitungseinheit (SOE) auf der Basis der Ontologie (SR, OR, OM) zur Erzeugung zumindest eines transformierten Gerätedatenmodells (TDM) automatisch transformiert wird und
**dass** das zumindest eine erweiterte Gerätedatenmodell (EDM) oder das transformierte Gerätedatenmodell (TDM) durch das Quellgerät (SD) für Zielgeräte (CD) der Zieldomain (TDO) bereitgestellt wird.

2. Verfahren nach Anspruch 1,
**dadurch gekennzeichnet**,
- Bereitstellen der Ontologie (SR, OR, OM) als domainspezifische Ontologie der Zieldomain (TDO) und/oder als normalisierte Ontologie (NOM),
- Laden der Gerätedaten (DD) oder des Gerätedatenmodells (DDM) sowie der domainspezifischen und/oder der normalisierten Ontologie (SR, OR, OM, NOM) in die Verarbeitungseinheit (SOE),
- Erzeugen der semantischen Information (SMP, SMI) durch Analyse der Gerätedaten (DD) oder des Gerätedatenmodells (DDM) auf der Basis von semantischen Regeln (SR), ontologischen Regeln (OR) und/oder eines domainspezifischen und/oder normalisierten ontologischen Modells (OM, NOM),
- Erzeugen des erweiterten Gerätedatenmodells (EDM) durch Einfügen der semantischen Information (SMP, SMI) in das Gerätedatenmodell (DDM) und/oder
- Transformation des Gerätedatenmodells (DDM) in ein domainspezifisches Gerätedatenmodell (TDM1, TDM2, TDM3) oder ein normalisiertes Datenmodell (NDM),
- Bereitstellen des erweiterten, domainspezifischen Gerätedatenmodells (DDM), des transformierten, domainspezifischen Gerätedatenmodells (TDM1, TDM2, TDM3) und/oder des transformierten, normalisierten Datenmodells (NDM) durch das Quellgerät (QD).

3. Verfahren nach Anspruch 1 oder 2,
**dadurch gekennzeichnet,**
**dass** das erweiterte Gerätedatenmodell (EDM) und/oder das transformierte Gerätedatenmodell (TDM; NDM) durch ein Kommunikationsmodul (CM) bereitgestellt wird, in dem ein Protokoll (ECP = Enhanced Communication Protocol) wie OPC UA implementiert ist, welches die Fähigkeit hat, Datenmodelle darzustellen.

4. Verfahren nach zumindest einem der vorhergehenden Ansprüche,
**dadurch gekennzeichnet,**
**dass** die semantischen Informationen in Form von Semantik-Metadaten-Punkten (SMP) in das Gerätedatenmodell (DDM) eingefügt werden.

5. Verfahren nach zumindest einem der vorhergehenden Ansprüche,
**dadurch gekennzeichnet,**
**dass** die Semantik-Metadaten-Punkte (SMP) bei einem Zugriff auf das erweiterte Gerätedatenmodell (EDM) durch ein Client-Device (CD) oder eine Client-Software (CSW) bereitgestellt werden und das nach einem Aufruf eines Semantik-Metadaten-Punktes (SMP) durch eine Gerätedatenquelle (DDS) des Quellgerätes (SD) ein dem Semantik-Metadaten-Punkt (SMP) zugeordneter realer Wert bereitgestellt wird.

6. Verfahren nach zumindest einem der vorhergehenden Ansprüche,
**dadurch gekennzeichnet,**
**dass** das erweiterte Gerätedatenmodell (EDM) durch eine Semantik-Metadaten-Ansicht (SMV) mit den Semantik-Metadaten-Punkten (SMP) zusammen mit einer Geräte-Daten-Ansicht (DDV) bereitgestellt wird, wobei die Semantik-Metadaten-Punkte (SMP) über Semantik-Metadaten-Referenzen (SMR) auf die Gerätedaten (DD) referenziert werden.

7. Verfahren nach zumindest einem der vorhergehenden Ansprüche,
**dadurch gekennzeichnet,**
**dass** die Semantik-Metadaten-Punkte (SMP) automatisch bei einer Änderung von Gerätedaten (DD) oder des Gerätedatenmodells (DDM) in das erweiterte Gerätedatenmodell (EDM) eingefügt werden, wobei die Änderung eine Strukturänderung oder eine Hinzufügung oder Entfernung eines Datenpunktes DP betrifft.

8. Verfahren nach zumindest einem der vorhergehenden Ansprüche,
**dadurch gekennzeichnet,**
**dass** die den Semantik-Metadaten-Punkten (SMP) zugeordneten realen Werte der Gerätedaten (DD) durch die Gerätedatenquelle (DDS) des Quellgerätes (SD) bereitgestellt werden.

9. Verfahren nach zumindest einem der vorhergehenden Ansprüche,
**dadurch gekennzeichnet,**
**dass** die Transformation des Gerätedatenmodells (DDM) durch die Verarbeitungseinheit (SOE) auf Basis von Ontologie-Regeln (OR) und/oder eines Ontologie-Modells (OM) der domainspezifischen Ontologie durchgeführt wird.

10. Verfahren nach zumindest einem der vorhergehenden Ansprüche,
**dadurch gekennzeichnet,**
**dass** aus dem normierten Gerätedatenmodell (NDM) weitere Gerätedatenmodelle (TDM2, TDM3, TDM4) erzeugt werden.

11. Verfahren nach zumindest einem der vorhergehenden Ansprüche,
**dadurch gekennzeichnet,**
**dass** die Semantik- und/oder Ontologie-Informationen auf Anfrage in eine von dem Quellgerät (SD) gesendete Netzwerk-Protokoll-Nachricht (NPM) eingebettet werden.

12. Gerät (SD), insbesondere Automatisierungsgerät, wie Feldgerät, mit einer Datenverarbeitungseinheit und einer Gerätedatenquelle (DDS) mit Gerätedaten (DD) gemäß eines Gerätedatenmodells (DDM),
**dadurch gekennzeichnet,**
**dass** in dem Gerät (SD) eine Verarbeitungseinheit (SOE) implementiert ist, die ausgebildet ist, auf der Basis einer Ontologie semantische und/oder ontologische Informationen (SMP) automatisch in das Gerätedatenmodell (DDM) einzufügen und/oder das Gerätedatenmodell (DDM) zu transformieren und bereitzustellen.

13. Gerät (SD) nach Anspruch 10,
**dadurch gekennzeichnet,**
**dass** die Verarbeitungseinheit (SOE) eingangsseitig über eine Schnittstelle mit der Gerätedatenquelle (DDS) gekoppelt ist und ausgangsseitig eine Kommunikationsmodul (CM) mit einer Client-/Serverschnittstelle zur Bereitstellung des durch die semantische und/oder ontologische Informationen erweiterten Gerätedatenmodells (EDM) aufweist, wobei in die Client-/Serverschnittstelle ein Protokoll (ECP) implementiert, vorzugsweise Enhanced Communication Protocol wie OPC UA, welches die Fähigkeit besitzt, Datenmodelle mit verschiedenen Hirarchien und Strukturen darzustellen.

14. Gerät (SD) nach zumindest einem der Ansprüche 10 bis 11,
**dadurch gekennzeichnet,**
**dass** die Verarbeitungseinheit (SOE) über ein Management-Interface (UI) durch Laden von semantischen Regeln, ontologischen Regel und/oder eines ontologischen Modells konfigurierbar ist.

15. Gerät (SD) nach zumindest einem der Ansprüche 10 bis 12,
**dadurch gekennzeichnet,**
**dass** das Gerät ein Feldgerät oder ein Gateway ist.
